# EUROPEAN PATENT APPLICATION

(11) **EP 2 187 049 A2**
(43) Date of publication of application: **19.05.2010**
(21) Application number: 09175323.6
(22) Date of filing: 06.11.2009
(51) Int. Cl.: F03D 11/00, F03D 1/00

(54) **Method for mounting components at a wind turbine**

(30) Priority: 17.11.2008 US 272111
(71) Applicant: General Electric Company, Schenectady, NY 12345 (US)
(72) Inventor: Edenfeld, Thomas, 49080, Osnabrück (DE)
(74) Representative: Bedford, Grant Richard

(57) **Abstract**

A method for mounting components at a wind turbine support unit (100) of a wind turbine is provided. The method includes the steps of providing a captive bolt gun, providing a fastening means (102), inserting a captive bolt (101) into the fastening means (102), and shooting the captive bolt (101) into the wind turbine support unit (100) by means of the captive bolt gun such that the fastening means (102) is fixed at the wind turbine support unit (100).

## Description

The present disclosure generally relates to the construction of a wind turbine, and in particular relates to a method and a device for mounting components at wind turbine support units of a wind turbine. Methods for mounting components at a wind turbine are manifold, such as drilling holes and thread cutting. The mounting components may be used to support units of the wind turbine, e.g. cables, cable tubes, etc.

In view of the above a method for mounting components at a wind turbine support unit of a wind turbine is provided, the method including the steps of providing a captive bolt gun, providing a fastening means, inserting a captive bolt into the fastening means, and shooting the captive bolt into the wind turbine support unit by means of the captive bolt gun such that the fastening means is fixed at the wind turbine support unit.

According to another aspect of the present invention a use of a captive bolt for mounting components in a wind turbine is provided.

According to yet another aspect a wind turbine including at least one wind turbine support unit is provided, wherein at least one fastening means adapted for mounting components at the wind turbine support unit of the wind turbine is fixed at the wind turbine support unit by means of at least one captive bolt.

Further exemplary embodiments are according to the dependent claims, the description and the accompanying drawings, in which:
Fig. 1 shows a construction of a captive bolt having a threaded bolt portion according to a typical embodiment;
Fig. 2 illustrates a captive bolt without threaded bolt portion according to another typical embodiment;
Fig. 3 illustrates yet another captive bolt having a bushing according to yet another typical embodiment;
Fig. 4 is an explosive view of the components which are fixed by a captive bolt at a wind turbine support unit;
Fig. 5 shows the components shown in Fig. 4 wherein the captive bolt has been inserted into a fastening means which may be fastened at the wind turbine support unit shown in Fig. 4;
Fig. 6 shows the components shown in Fig. 4 and 5 wherein the captive bolt 101 has been inserted into the wind turbine support unit such that the fastening means is fastened; and
Fig. 7 is a flowchart illustrating a method for mounting components at a wind turbine support unit of a wind turbine according to a typical embodiment.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

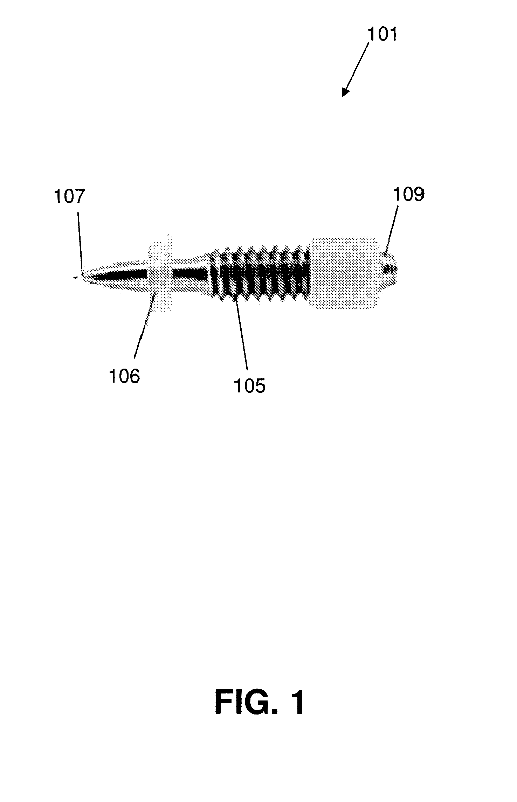

Fig. 1 illustrates a captive bolt 101 according to a typical embodiment. The captive bolt 101 includes a tip portion 107 which may be driven into a support unit (not shown in Fig. 1). The material of the captive bolt 101 may be steel having high chromium and/or nickel content.

The captive bolt 101 may be driven into materials such as aluminium, concrete or steel. A washer 106 may be arranged around the axis of the captive bolt 101 in order to fix a fastening means (not shown in Fig. 1) and in order to prevent that the captive bolt is shot through the fastening means. Furthermore, the captive bolt 101 includes a head portion 109 used to fix the fastening means. The captive bolt 101 shown in Fig. 1 moreover includes a threaded bolt portion 105 which can be used to screw the bolt further into the material of a support unit.

It is noted here that a captive bolt gun may be provided in order to drive the captive bolt 101 into the support unit. The use of a captive bolt gun for mounting components of a wind turbine at wind turbine support units saves mounting time and thus costs during the installation of a wind turbine. Components which are mounted at support units of a wind turbine include cables, cable tubes, etc.

These components require many fastening means which have to be mounted at the support units. By just shooting the captive bolts 101 onto the support unit using a captive bolt gun, a large amount of the mounting time for mounting the fastening means at the support unit is saved.

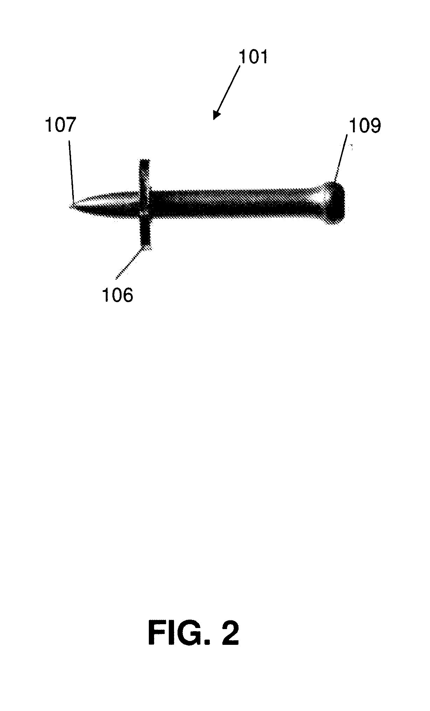

Fig. 2 exhibits a captive bolt according to another typical embodiment. The captive bolt 101 shown in Fig. 2 includes a tip portion 107 and a head portion 109. Furthermore, a washer 106 is provided in order to be able to fix fastening means without punching the captive bolt 101 through the fastening means. The captive bolt 101 shown in Fig. 2 has no threaded bolt portion as the captive bolt 101 shown in Fig. 1.

Thus it is possible to fix a fastening means at a support unit without screwing the captive bolt 101. The captive bolt 101 is just driven into the material of the support unit by shooting it using the captive bolt gun.

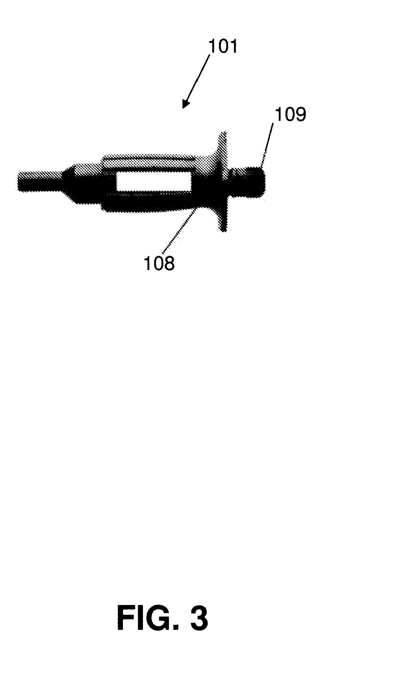

Fig. 3 illustrates a captive bolt 101 which has no tip portion 107 as the captive bolts 101 shown in Fig. 1 and 2. The captive bolt 101 shown in Fig. 3 has a flattened front end which may be inserted into a hole in a support unit which has been drilled in advance.

When the captive bolt 101 is driven into the support unit by means of a captive bolt gun, a portion of increased diameter of the captive bolt 101 shown in Fig. 3 provides a fixing of the captive bolt 101 in the drilled hole. The captive bolt 101 shown in Fig. 3 moreover includes a bushing 108 which is used to provide an efficient fixing of a fastening means at a support unit.

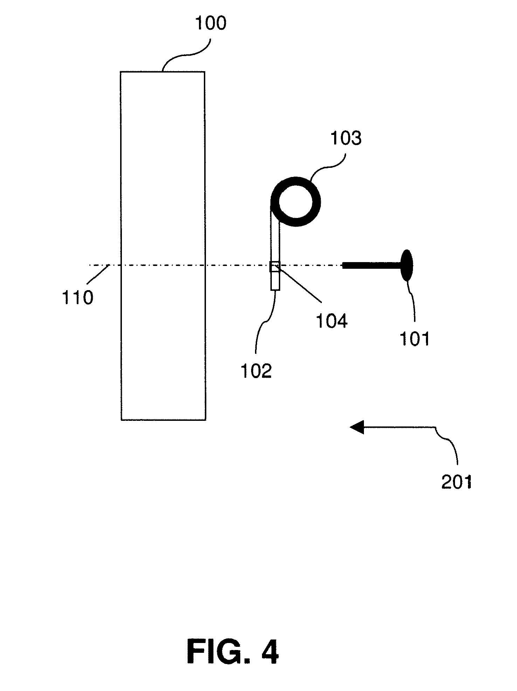

Fig. 4 is an explosive view of components used for fastening a fastening means 102 at a wind turbine support unit 100. It is noted here that the wind turbine support unit 100 may be any part of the wind turbine where components such as cables, cable tubes, etc. are mounted. As shown in Fig. 4, the fastening means 102 is provided with a cable connector 103 where cables and cable tubes may be fastened. Using a captive bolt gun (not shown in Fig. 4), the captive bolt 101 is driven in a shooting direction 201 along an insertion axis 110 towards the wind turbine support unit 100. Without drilling the hole into the wind turbine support unit 100, it is possible to fix the fastening means 102 firmly at the wind turbine support unit 100.

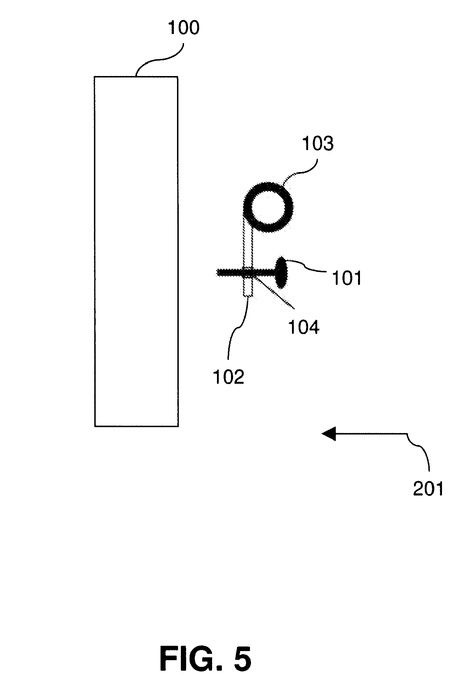

Fig. 5 shows the situation at a step following the mounting step shown in Fig. 4. As shown in Fig. 5, the captive bolt 101 has been inserted into a mounting hole 104 of the fastening means 102 or directly into the fastening means 102 in the insertion direction 201.

With the captive bolt 101 thus inserted into the mounting hole 104 of the fastening means 102 or directly into the fastening means 102, it is possible to shoot the captive bolt 101 - fastening means 102 - assembly onto the wind turbine support unit 100. The captive bolt gun is held atop the head of the captive bolt 101 and shoots the captive bolt 101 together with the fastening means 102 towards the wind turbine support unit 100.

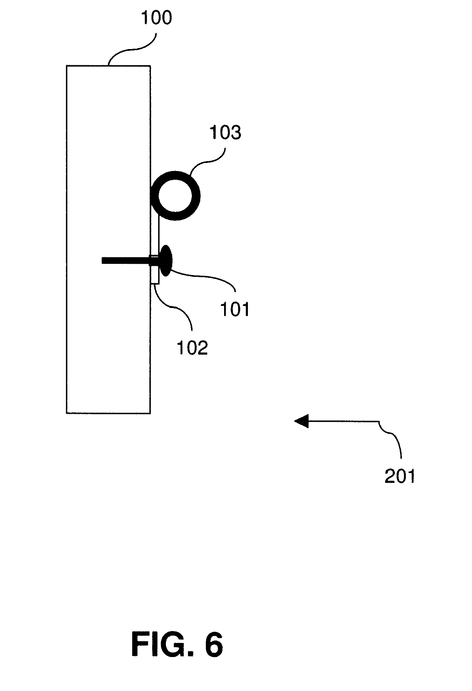

Fig. 6 shows the situation after the captive bolt 101 has been shot into the wind turbine support unit 100 in the insertion direction 201. The fastening means 102 including the cable connector 103 is firmly fixed at the wind turbine support unit 100 by means of the captive bolt 101.

It is noted here that the captive bolt having the threaded bolt portion 105 as shown in Fig. 1 may be used instead of the captive bolt shown in Figs. 4-6 without threaded bolt portion. In this case it is possible, in addition to shooting the captive bolt 141 into the wind turbine support unit 100, to fasten the captive bolt 101 1 by screwing it into the wind turbine support unit 100. Furthermore, a washer 106 (shown in Fig. 2) may be used in the mounting situations shown in Figs. 4-6.

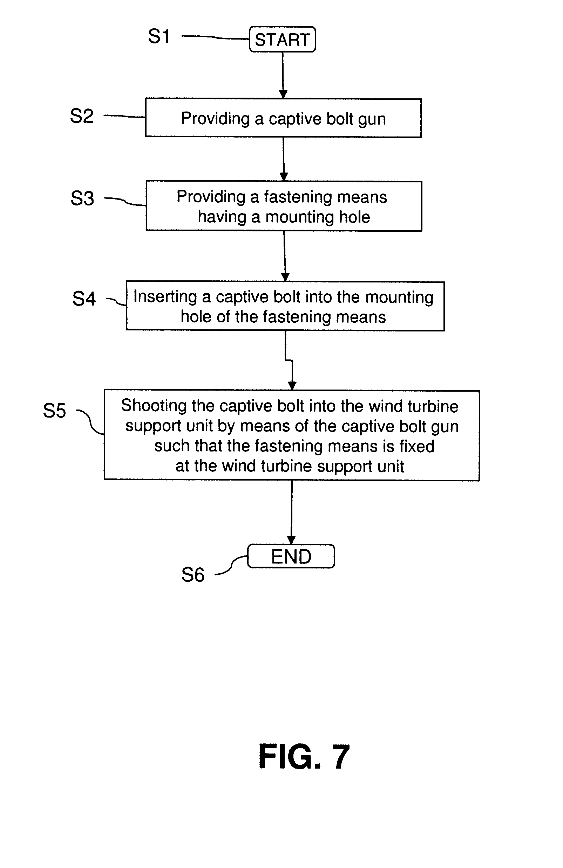

Fig. 7 is a flowchart illustrating a method for mounting components at a wind turbine support unit 100 of a wind turbine according to a typical embodiment.

The procedure starts at a step S 1. At a step S2, a captive bolt gun is provided which is adapted for shooting captive bolts 101 (shown in Figs. 1-6) into the wind turbine support unit 100 (shown in Figs. 4-6). Then the procedure advances to step S3. At step S3, a fastening means 102 (shown in Figs. 4-6) which may have a mounting hole 104 is provided.

At a step S4, a captive bolt 101 (shown in Figs. 1-6) is inserted into the mounting hole 104 of the fastening means 102 or directly into the fastening means 102. Then the procedure advances to a step S5 where the captive bolt gun is used for shooting the captive bolt 101 in a direction shown by an arrow 201 in Figs. 4-6.

After having shot the captive bolt 101 into the wind turbine support unit 100 by means of the captive bolt gun, the fastening means 102 is firmly fixed at the wind turbine support unit 100. At step S6, the procedure is ended.

The invention has been described on the basis of embodiments which are shown in the appended drawings and from which further advantages and modifications emerge. However, the disclosure is not restricted to the embodiments described in concrete terms, but rather can be modified and varied in a suitable manner. It lies within the scope to combine individual features and combinations of features of one embodiment with features and combinations of features of another embodiment in a suitable manner in order to arrive at further embodiments.

It will be apparent to those skilled in the art, based upon the teachings herein, that changes and modifications may be made without departing from the disclosure and its broader aspects. That is, all examples set forth herein above are intended to be exemplary and non-limiting.

Various aspects and embodiments of the present invention are defined by the following numbered clauses:
1. A method for mounting components at a wind turbine support unit of a wind turbine, the method comprising:
   providing a captive bolt gun;
   providing a fastening means;
   inserting a captive bolt into the fastening means; and
   shooting the captive bolt into the wind turbine support unit by means of the captive bolt gun such that the fastening means is fixed at the wind turbine support unit.
2. The method in accordance with clause 1, wherein the captive bolt is partly formed with a threaded portion which is adapted to be screwed into the wind turbine support unit.
3. The method in accordance with any preceding clause, wherein the fastening means is fixed using a washer provided at the captive bolt.
4. The method in accordance with any preceding clause, wherein the captive bolt is made of steel having a high content of at least nickel or chromium.
5. The method in accordance with any preceding clause, wherein the fastening means is adapted for fixing cables at the wind turbine support unit.
6. The method in accordance with any preceding clause, wherein the fastening means is adapted for fixing cable tubes at the wind turbine support unit.
7. The method in accordance with any preceding clause, wherein the wind turbine support unit is formed as a steel wall within a machine nacelle of the wind turbine.
8. The method in accordance with any preceding clause, wherein the turbine support unit is formed as an outer portion of a generator assembly of the wind turbine.
9. The method in accordance with any preceding clause, wherein the turbine support unit is provided as a hub of the wind turbine.
10. The method in accordance with any preceding clause, wherein the turbine support unit is provided as at least one of a beam, a casted component, a bed plate, a housing of a gearbox and a main frame within a machine nacelle of the wind turbine.
11. The method in accordance with any preceding clause, wherein the turbine support unit is provided as a beam or a concrete wall at a tower assembly of the wind turbine.
12. Use of a captive bolt for mounting components in a wind turbine.
13. Use of a captive bolt in accordance with any preceding clause, wherein the captive bolt is screwed into a wind turbine support unit by means of a threaded portion provided at the captive bolt.
14. Use of a captive bolt in accordance with any preceding clause, wherein a fastening means is fixed at a wind turbine support unit by shooting the captive bolt into the wind turbine support unit.
15. Use of a captive bolt in accordance with any preceding clause, wherein the captive bolt is made of steel having a high content of at least nickel or chromium.
16. Use of a captive bolt in accordance with any preceding clause, wherein the fastening means is adapted for fixing cables at the wind turbine support unit.
17. Use of a captive bolt in accordance with any preceding clause, wherein is adapted for fixing cable tubes at the wind turbine support unit.
18. Use of a captive bolt in accordance with any preceding clause, wherein the wind turbine support unit is formed as a steel wall within a machine nacelle of the wind turbine.
19. Use of a captive bolt in accordance with any preceding clause, wherein the turbine support unit is provided as a beam within a machine nacelle of the wind turbine.
20. Use of a captive bolt in accordance with any preceding clause, wherein the turbine support unit is provided as a beam or a concrete wall at a tower assembly of the wind turbine.
21. A wind turbine comprising at least one wind turbine support unit, wherein at least one fastening means adapted for mounting components at the wind turbine support unit of the wind turbine is fixed at the wind turbine support unit by means of at least one captive bolt.

## Claims

1. A method for mounting components at a wind turbine support unit (100) of a wind turbine, the method comprising:
providing a captive bolt gun;
providing a fastening means (102);
inserting a captive bolt (101) into the fastening means (102); and
shooting the captive bolt (101) into the wind turbine support unit (100) by means of the captive bolt gun such that the fastening means (102) is fixed at the wind turbine support unit (100).

2. The method in accordance with claim 1, wherein the captive bolt (101) is partly formed with a threaded portion (105) which is adapted to be screwed into the wind turbine support unit (100).

3. The method in accordance with any preceding claim, wherein the fastening means (102) is fixed using a washer (106) provided at the captive bolt (101).

4. The method in accordance with any preceding claim, wherein the captive bolt (101) is made of steel a having a high content of at least nickel or chromium.

5. The method in accordance with any preceding claim, wherein the fastening means (102) is adapted for fixing cables or cable tubes at the wind turbine support unit (100).

6. The method in accordance with any preceding claim, wherein the wind turbine support unit (100) is provided as at least one of a beam, a hub, a casted component, a bed plate, a housing of a gearbox, a main frame, a beam within a machine nacelle, and a beam or a concrete wall at a tower assembly of the wind turbine.

7. Use of a captive bolt (101) for mounting components in a wind turbine.

8. Use of a captive bolt (101) in accordance with claim 7, wherein the captive bolt (101) is screwed into a wind turbine support unit (100) by means of a threaded portion provided at the captive bolt (101).

9. Use of a captive bolt (101) in accordance with claim 7 or claim 8, wherein a fastening means (102) is fixed at a wind turbine support unit (100) by shooting the captive bolt (101) into the wind turbine support unit (100).

10. Use of a captive bolt (101) in accordance with any of claims 7 to 9, wherein the captive bolt (101) is made of steel having a high content of at least nickel or chromium.

11. Use of a captive bolt (101) in accordance with any of claims 7 to 10, wherein the fastening means (102) is adapted for fixing cables or cable tubes at the wind turbine support unit (100).

12. Use of a captive bolt (101) in accordance with any of claims 7 to 11, wherein the wind turbine support unit (100) is provided as at least one of a steel wall within a machine nacelle, a hub, a casted component, a bedplate, an outer portion of a generator assembly, a housing of a gearbox, a beam within a machine nacelle, and a beam or a concrete wall at a tower assembly.
